# EUROPEAN PATENT APPLICATION

(11) **EP 1 845 449 A2**
(43) Date of publication of application: **17.10.2007**
(21) Application number: 06256334.1
(22) Date of filing: 13.12.2006
(51) Int. Cl.: G06F 11/14

(54) **System and method for processing a plurality kinds of event markers of a continuous data protection**

(30) Priority: 14.04.2006 US 404190
(71) Applicant: HITACHI, LTD., Chiyoda-ku Tokyo 100-8280 (JP)
(72) Inventor: Kano, Yoshiki, c/o Hitachi Ltd., Chiyoda-ku Tokyo 100-8220 (JP)
(74) Representative: Hodsdon, Stephen James

(57) **Abstract**

Described is a computerized system for continuous data protection. The system includes a host (10) executing a user application and a storage subsystem (30) coupled to the host via a network interconnect (400). The storage subsystem comprises a storage controller (20) and a storage disc (32) coupled to the storage controller. The storage disc is apportioned into logical partitions. The storage subsystem additionally includes a primary volume (P-VOL) storing current data associated with the user application; a base volume (Base-VOL) storing a point-in-time copy of the data associated with the user application; a journal volume (Journal) storing data associated with the user application; and a journal manager (24) configured to intercept a data write request sent by the host (10) to the storage subsystem (30) and to write data associated with the intercepted request to the primary volume and the base volume and to write the second data associated with the user application into the journal volume. Using the described technology, an application, like an RDBMS (DB), can control storage subsystem based on application specified marker operation. As one of examples, DBMS keeps roll back data records on a storage medium, even if the application executes in the online backup mode which prescribes keeping only roll forward information on the pending transactions.

## Description

This invention generally relates to data storage systems and, more specifically, to continuous data protection using storage subsystem.

Continuous Data Protection (CDP) technology provides a continuous protection for user data by journaling every write input-output (lO) operation performed by a user application. The log is stored on a storage device, which is independent from the primary system storage. The modern CDP systems detect various activities of the target software application, such as timing checkpoint in events or the installation of the application. The CDP systems then store information on the activities of the target, writing the marker information in the header of the respective log records.

An exemplary storage based CDP system is described in a published U.S. Patent Application No. US20040268067 A1, titled "Method and apparatus for backup and recovery system using storage based journaling as a reference," which is incorporated herein by reference. The described system provides copy on write journaling capabilities and keeps unique sequence number for journal log and snapshot images of application data.

In addition, there are several available commercial CDP products. One major enterprise product is REVIVO CPS 1200i. The description of this product can be found at http://www.revivio.com/index.asp?p=prod_CPS_1200i, and is incorporated herein by reference. The aforesaid product operates to mirror input-output (lO) operations performed by a host system. The data mirroring is performed by an appliance, which receives mirrored lO data and stores the received data in the journal format, additionally providing indexing information for subsequent restore operation.

Another CDP product, which is capable of studying the behavior of a software application, is XOSoft's Enterprise Rewinder User Guide product, a description of which may be downloaded from http://www.xosoft.com/documentation/EnterpriseRewinder_User_Guide.pdf and is incorporated by reference herein. This product, designed specifically for Microsoft® Exchange®, adjusts its own operation based on the behavior of the user application.

Despite the above advances, a new technology is required to provide further efficiency of the CDP behavior as well as additional intelligence within the storage subsystem, which would involve better understanding of the behavior of the target application.

An object of the invention is to provide methods and systems that preferably substantially obviate one or more of the above and other problems associated with conventional techniques for continuous data protection.

In accordance with one aspect of the invention, there is provided a computerized system and an associate method and computer programming product for continuous data protection. The system preferably includes a host executing a user application and a storage subsystem coupled to the host via a network interconnect. The storage subsystem includes a storage controller and at least one storage disc connected to the storage controller. The storage disc(s) is apportioned into logical partition(s). The storage subsystem further includes a primary volume operable to store current data associated with the user application; a base volume storing first data associated with the user application; a journal volume storing second data associated with the user application; a journal manager operable to intercept a data write request sent by the host to the storage subsystem and to write data associated with the intercepted request to the primary volume and the base volume and to write the second data associated with the user application into the journal volume and a command device operable to receive from the host a command attribute, and to configure the journal manager based on the received command attribute.

In accordance with another aspect of the invention, there is provided a computer-implemented method and an associate system and computer programming product. The method of this aspect preferably involves receiving at a storage subsystem a command attribute specifying a after journaling mode; intercepting at a storage subsystem a storage access command issued by a user application; determining whether the intercepted storage access command includes a write operation; if the intercepted storage access command does not include the write operation, processing the intercepted storage access command at primary storage volume and terminating the operation; if the intercepted storage access command includes the write operation, writing data associated with the storage access command to the primary volume; and writing incremental change data associated with the storage access command to a journal volume.

In accordance with yet another aspect of the invention, there is provided a computer-implemented method and an associate system and computer programming product. The method of this aspect preferably involves receiving at a storage subsystem a command attribute specifying a before journaling mode; intercepting at a storage subsystem a storage access command issued by a user application; determining whether the intercepted storage access command includes a write operation; if the intercepted storage access command does not include the write operation, processing the intercepted storage access command at primary storage volume and terminating the operation; if the intercepted storage access command includes the write operation, writing data associated with the storage access command to the primary volume; copying old data from a base volume to a journal volume; and writing data associated with the storage access command to the base volume.

Additional aspects related to the invention will be set forth in part in the description which follows, and in part will be obvious from the description, or may be learned by practice of the invention. Aspects of the invention may be realized and attained by means of the elements and combinations of various elements and aspects particularly pointed out in the following detailed description and the appended claims.

It is to be understood that both the foregoing and the following descriptions are exemplary and explanatory only and are not intended to limit the claimed invention or application thereof in any manner whatsoever.

### BRIEF DESCRIPTION OF THE DRAWINGS

The accompanying drawings, which are incorporated in and constitute a part of this specification exemplify the embodiments of the present invention and, together with the description, serve to explain and illustrate principles of the invention. Specifically:

Fig 1 depicts an exemplary system architecture in accordance with an embodiment of the invention;

Fig 2 is a diagram illustrating exemplary logical organization of various software components of the inventive system and interoperations among them;

Fig 3 illustrates exemplary application programming interfaces of the agent application;

Fig 4 illustrates an exemplary logical device manager table;

Fig 5 illustrates exemplary configuration of the inventive CDP system;

Fig 6 illustrates pool of logical devices within the inventive system;

Fig 7 illustrates exemplary behavior of after journal monitor;

Fig 8 illustrates a procedure for handling the write command directed to a target logical device;

Fig 9 illustrates exemplary behavior of before journal monitor;

Fig 10 illustrates exemplary procedure for handling the write command for target logical devices;

Fig 11 illustrates the operation of the inventive journal manager;

Fig 12 depicts exemplary application attribute and action table illustrating actions corresponding to specific attributes;

Fig 13 provides a list of actions of the inventive CDP system;

Fig 14 illustrates exemplary operating sequence of a restore procedure using before and after journals;

Fig 15 illustrates exemplary embodiment of logical unit to logical device mapping table;

Fig 16 illustrates an exemplary graphical user interface of the inventive CDP system;

Fig 17 and Fig 18 illustrate operation of the inventive CDP system interacting with an application by means of inventive attribute function;

Fig 19 illustrates an exemplary embodiment of a table storing information on a virtual logical unit group;

Fig 20 provides mapping between internal events of a database application and the corresponding attributes of the inventive CDP system; and

Fig 21 shows exemplary configuration of storage system in accordance with an embodiment of the invention.

In the following detailed description, reference will be made to the accompanying drawing(s), in which identical functional elements are designated with like numerals. The aforementioned accompanying drawings show by way of illustration and not by way of limitation, specific embodiments and implementations consistent with principles of the present invention. These implementations are described in sufficient detail to enable those skilled in the art to practice the invention and it is to be understood that other implementations may be utilized and that structural changes and/or substitutions of various elements may be made without departing from the scope and spirit of present invention. The following detailed description is, therefore, not to be construed in a limited sense. Additionally, the various embodiments of the invention as described may be implemented in the form of a software running on a general purpose computer, in the form of a specialized hardware, or combination of software and hardware.

Initially, before the following detailed description, certain special terminology used within the aforesaid description will be explained. Specifically, as used herein, Logical Unit (LU) is a unit which is used to access data from host using SCSI command(s) on storage subsystem. The LU needs to be mapped to at least one logical device (LDEV). Logical Unit Number (LUN) is an identification number for each LU, which is used to specify the logical unit using SCSI command. Each LU has an associated set of World Wide Names (WWN) as well as LUN.

Logical Device (LDEV) is a storage area configured to store data within a storage subsystem. It may consist of at least one physical disc. Image is an LDEV to which journal data is applied. Virtual LU is an LU which is accessible from a host regardless of the existence of an LDEV associated with that LU. Marker is sent from host's agent to storage subsystem. Finally, Header/Footer information may include metadata for journal provided to keep data and marker, which is sent from host.

### First Embodiment

The first embodiment of the invention illustrates the manner in which CDP deployed on a storage subsystem provides a capability to select application's action based on attribute using table of attributes and actions. The CDP of the inventive system may operate in both before and after journaling modes. One of the benefits that may be achieved through the use of the inventive concept is that the application can control the CDP operating modes when the state of the application changes, thereby the length of the journal data on storage subsystem's CDP can be reduced when application is initiated. In addition, the application can keep the "before" image even if the application, such as a database application, enters an online backup mode or rolls forward an operation on recovery.

### Physical Configuration

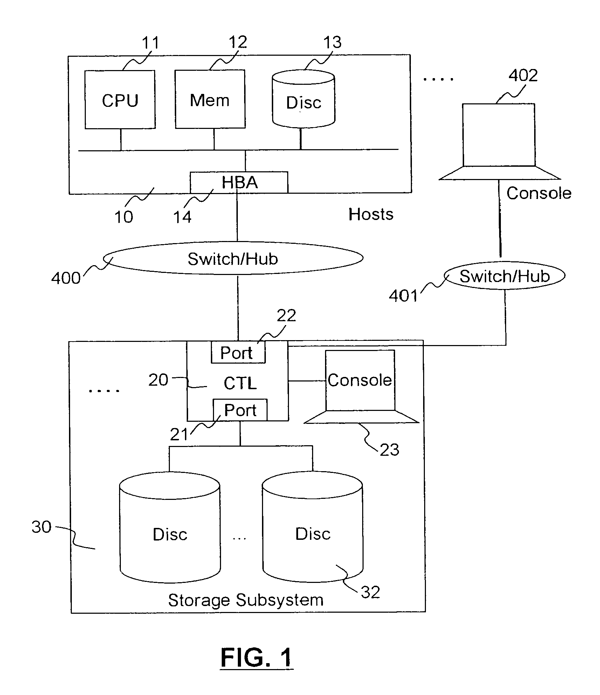

Fig 1 shows a diagram illustrating various hardware components of the first exemplary embodiment of the present invention, as well as the interconnections among these components. The embodiment of the invention shown in Fig 1 includes at least one host 10 operatively coupled to at least one storage subsystem 30. The host 10 may include an operating system (OS) executing on a hardware platform of the host 10. The hardware of the host 10 may be implemented in a form of a standard workstation or a personal computer. The host may include a central processing unit (CPU) 11, memory 12, and internal storage disc drive 13. The host may also include a host bus adapter (HBA) 14 operable to connect the host 10 to fibre channel (FC) or Ethernet switch 400. Each host 10 may store its data on one or more logical units (LU) provided by the storage subsystem 30.

The storage subsystem 30 may have the following capabilities. Specifically, the storage subsystem 30 may be configured to store data using SCSI-2, 3 commands through fibre channel protocol (FCP) on the logical storage units (LU) allocated within the storage resources of the storage subsystem 30. The storage subsystem 30 may additionally incorporate one or more RAID controllers (CTL) 20 and one or more storage disc drives 32. The controller 20 may include one or more central processing units, one or more memory units, as well as one or more network interfaces (NIC), which may include Ethernet and/or FC ports 21 and 22. The aforesaid ports may be provided to connect the system to a storage area network (SAN) or to the discs 32 in order to enable the processing of the SCSI I/O operations. The RAID configuration of the storage subsystem 30 may use several discs 32 residing within the storage subsystem. The controller 20 preferably includes a non-volatile random access memory (NVRAM) and is configured to utilize the aforesaid NVRAM as a data cache device or a device for protecting data, for example, from a power failure.

The controller 20 provides the storage subsystem with ports which have associated WWNs (World Wide Names), specifying the target ID within the SCSI world, and consisting of a logical unit number (LUN) on a fibre channel (FC) port. The storage subsystem may additionally include a management console 23, which may be connected to the storage subsystem 30 via an internal interconnect. The storage system 30 may be additionally accessed through console 402 connected to the system 30 via a switch/hub 401. The console 402 may be implemented using a general-purpose web-based PC or a similar workstation system arranged to manage the storage subsystem 30. The console 23 is configured to be utilized by a maintainer of the storage system 30. The console 402 is provided for use by a storage system administrator and may be located outside of the storage system enclosure and can be accessible by beans of the aforesaid switch/hub 401.

### Logical Configuration

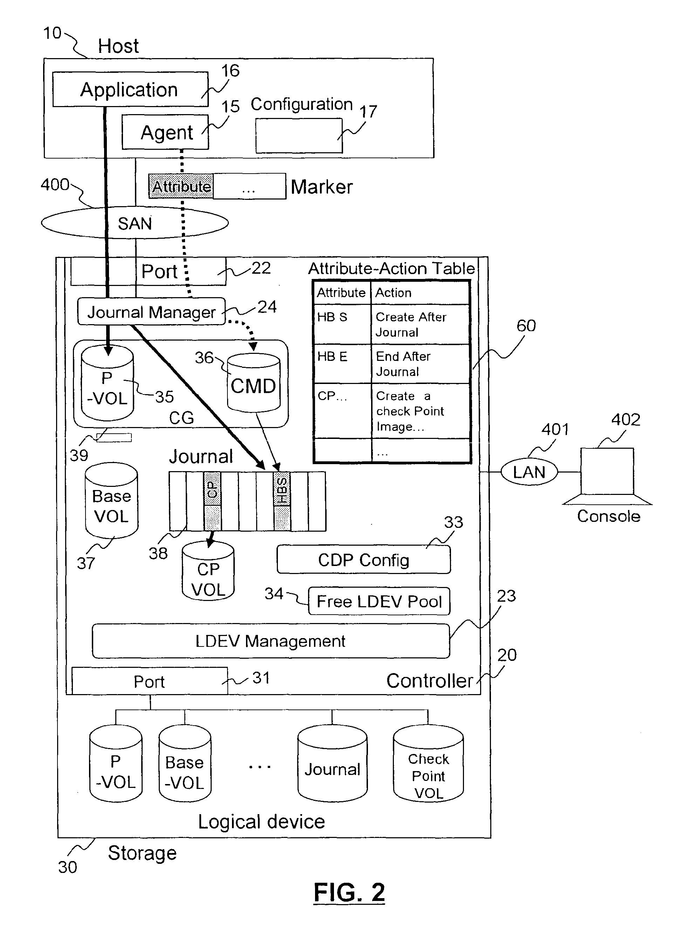

Fig 2 shows a schematic diagram illustrating the logical organization of various software components of the described embodiment of the inventive system as well as the interoperations among those components.

### SAN 400

The storage area network (SAN) 400 provides a logical data connection between the host 10 and the storage subsystem 30. The SAN 400 may be implemented using, for example, a switch or a hub, operating according, for example, to the fibre channel (FC) and/or Ethernet protocols, well known to persons of skill in the art. As would be appreciated by those of skill in the art, the present invention is not limited to any specific protocol and other suitable protocols may be used in implementing the SAN 400. The SAN functionality may be provided by, for example, an appropriate fibre channel (FC) switch or hub, or an Ethernet switch or hub.

### LAN/WAN 401

The LAN/WAN 401 provides a logical connection between the Console 402 and the Storage Subsystem 30 using, for example, various network switches, such as Ethernet, FDDI or Token Ring switches, or the like. The storage subsystem 30 is connected to LAN/WAN 401 to enable the access thereto from other hosts for purposes of managing the storage subsystem 30.

### Host 10

The host 10 may include an operating system (OS) (not shown in the figure), an application 16, such as a database application (DB), and an agent 15. The OS may be any suitable operation system including, without limitation, UNIX®, Microsoft Windows®, Sun™ SolariS™, IBM®'s Z/OS® or AIX®. As would be appreciated by those of skill in the art, may other types of operating systems, known to persons of skill in the art, may be used. The application may be a transaction type application, such as a database (DB) or any other kind of office-type application.

The agent 15 communicates with the storage subsystem 30. With respect to the communication method utilized for communications between the agent and the storage subsystem, one embodiment of the invention uses a technology which controls the storage device(s) using SCSI command sets. This technology is well known to persons of skill in the art, and is described, for example, in European patent No. EP1246050, which is incorporated herein by reference. It should be noted that the agent 15 generally corresponds to the operation API (RMLIB) on the host computer of the system described in EP1246050. On the other hand, the command device (CMD DEV) 36 of the present invention is generally equivalent to command device (CM) described in the EP1246050.

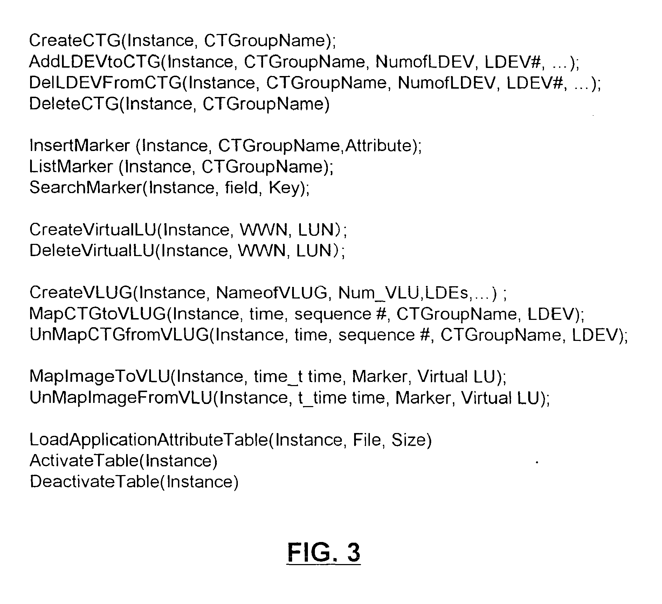

The agent 15 may have several application programming interfaces (APIs) configured to control the CDP deployed within the storage subsystem 30. Specifically, Fig 3 shows an exemplary list of the respective APIs. Each function call in the API set of the agent 15 has an instance number. This instance is created after the communication path is established between the agent 15 and the CMD DEV 36. Each function call uses the created instance to enable the storage subsystem to identify communications between the application and storage subsystem. The following description provides detailed information on the role of the specific functions.

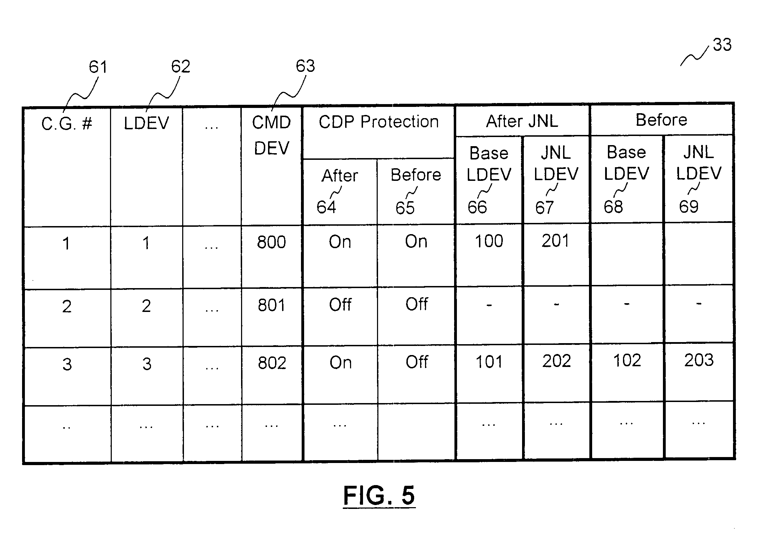

CreateCTG function creates a consistency group, such as group 39 shown in Fig 2 using the CTGGroupName's name within the storage subsystem 30. The consistency group provides the serialization of input and output (lO) among logical units (LUs), which include target logical devices (LDEVs) and CMD DEV 36 within the consistency group in the storage subsystem 30. Within a consistency group, the after journal (JNL) and the before JNL mechanisms (discussed in detail below) can be used together. When a new consistency group is created, a new row is added to the list 33 shown in Fig 5.

AddLDEVtoCTG function requests to add a logical unit (LU) mapped logical device (LDEV) including target LUs and CMD DEV into the defined consistency group. Storage subsystem stores the added LDEV in the LDEV column 62 of table 33 shown in Fig 5, in a row, which corresponds to the proper consistency group.

DelLDEVtoCTG function deletes the LDEV, which has been previously added into the consistency group from the defined consistency group. Upon the receipt of this command, the storage subsystem deletes the specified LDEV from a list of LDEV in column 62 of the table 33 of Fig 5.

InsertMarker function issues a maker corresponding to the consistency group with an application attribute. The aforesaid application attribute controls the operation of the storage system based on the behavior of the application. The mapping between the application attribute and a CDP action is defined and stored within the storage subsystem 30. The aforesaid definition is loaded from the agent or a console to the controller. The application attributes as well as the CDP actions are based on CDP architecture and will be discussed in detail below.

ListMarker function shows a list of JNL markers specified by the API. When the function is executed on storage subsystem, JNL manager reads the markers. To optimize the performance of the journaling function, the markers may be stored using a cache. The result of the execution of this function includes the marked time as well as an attribute corresponding to the marker.

SerachMarker function requests the inventive system to search markers based on one or more keys within user-specified field of the JNL's header. The storage subsystem returns a result of the search, which includes sequence number #, the searched field name, and the values of the JNL markers.

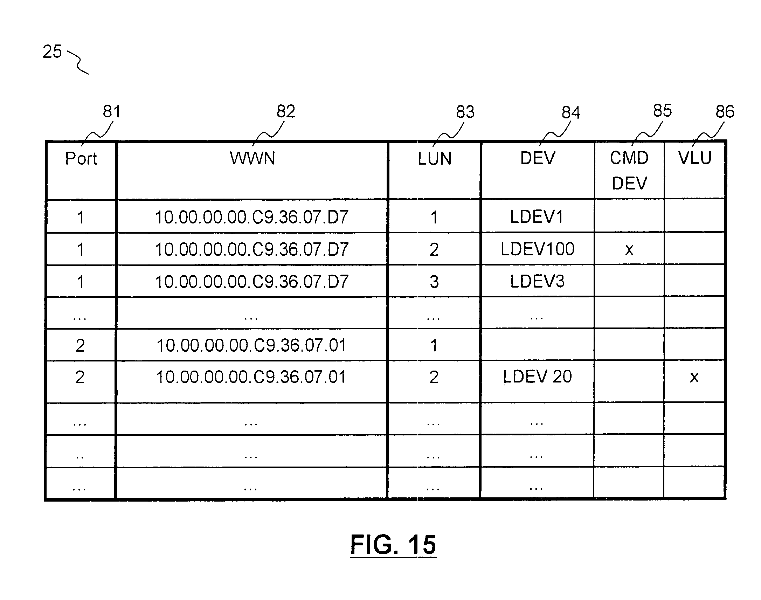

CreateVirtualLU function requests to create a virtual LU which will be discussed in detail below. DeleteVirtualLU function requests to delete the created virtual LU from a specific port. After the deletion of the virtual LU, storage subsystem 30 deletes an entry corresponding to that virtual LU from DEV column 84 shown in Fig 15, in the row corresponding to the selected port.

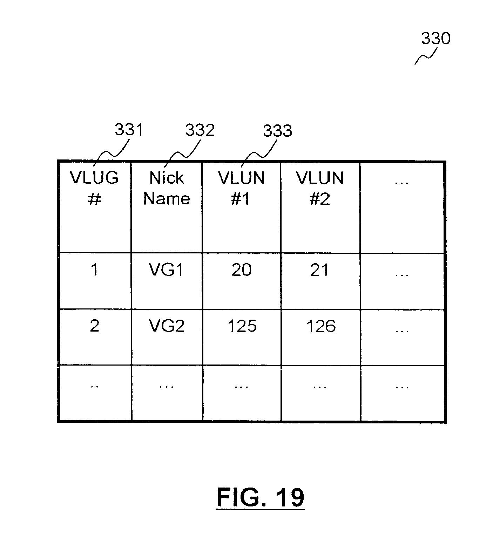

CreateVLUG function requests to create a group of virtual LUs. Storage subsystem 30 creates a new virtual LU group and inserts a new row within the table 330 shown in Fig 19. The inserted row includes virtual LU group identifier 331 as well as a nick name 332 of the created virtual LU group. The nick name 332 is entered from the corresponding function call. Virtual LUN numbers 333 in table 330 of Fig 19 are generated using CreateVirtualLU function executed recursively using the LUNs specified by the function call.

MapCTGtoVLUG function requests to create a set of consistency group's images from JNLs specified by time and sequence # and maps the set to the created named virtual LU group. When the storage subsystem maps a set of images on consistency group, the storage subsystem executes the MapImageToVLU function. The order of selecting target VLU on each MapImageToVLU operation is the increment of source LUN on consistency group. For example, there are LUN 1, 2, 3, and 4 on consistency group and there are Virtual LUN 20, 21, 22 ,23 on virtual LU consistency group. At first, image for LUN 1 is mapped to Virtual LUN 20 and incrementally image for LUN 2 is mapped to Virtual LUN 21. It continues to LUN 4.

UnMapCTGfromVLUG function requests to un-map the set from the created named virtual LU group. Storage subsystem un-maps a set of images which is described in Virtual LUN numbers 333 in a Virtual LU group on Fig 19 using UnMapImageFromVLU recursively for each image.

MapImageToVLU function requests to create an image which represents the journal records applied to a specific LDEV. The portion of the journal to be applied are specified by time and sequence #. The system then maps the created image to a Virtual LU, accessible to the user applications. Storage subsystem selects records from JNL having header information matching the specified time and sequence # and creates a volume. This feature of the inventive system will discussed hereinbelow in connection with the description of the Before/After JNL mechanism. After the image is created, this image is mapped to an LU using DEV column 84 of the table 25 shown in Fig 15.

UnMapImageFromVLU function requests to un-map the image from the created group of virtual LU. The storage subsystem deletes an entry corresponding to the selected image from DEV column 84 in Fig 15.

LoadApplicationAttributesTable function loads a configuration file, which describes application and action table 60 information to host. The format may use CSV format which is that each column is separated by comma and the row is separated by return, to controller 20. The controller 20 converts format to their memory format like 60.

The ActivateTable function activates the Application attribute and action table 60 for subsequent use in the marker operation. The DeactivateTable function deactivates the he Application attribute and action table 60 to un-use marker operation. In an embodiment of the invention, a command line interface for the aforesaid API operations is provided, with the parameters will be as above function call as well.

The behavior of the API is based on the CDP architecture, and will be discussed in detail below. The host also maintains a configuration file 17, which is described with reference to the LoadApplicationAttributesTable function.

### Storage Subsystem 30

In one embodiment of the invention, the modules of storage subsystem 30 are enabled in microcode which is executed on the controller (CTL) and is provided as a program code installing form optical media, FD, and/or other removable devices. The microcode consists of parity group manager, logical device manager (LDEV Manager) 23 that creates a logical device to provide a logical storage from physical discs to IO process, Port 22 and Journal (JNL) Manager 24. The description below provides additional details on the aforesaid modules.

### Parity group manager (This module is not depicted in Fig 2)

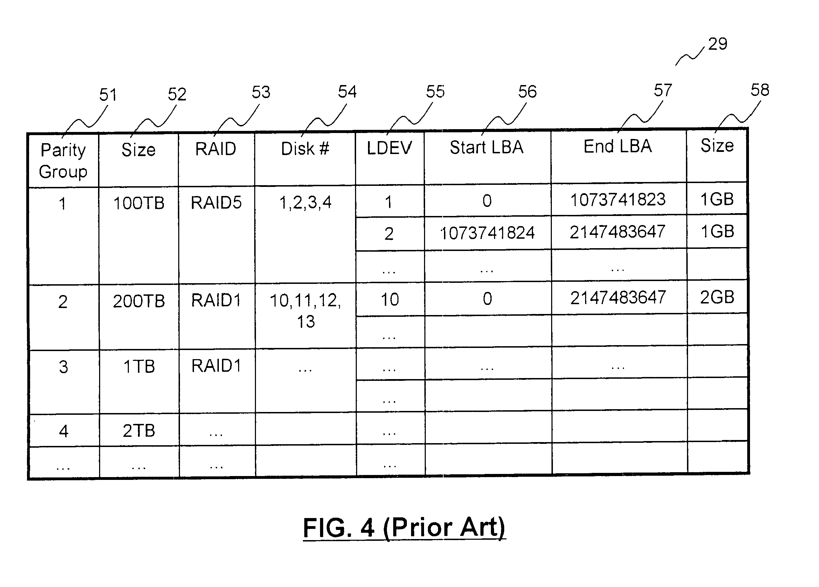

This module is a part of microcode and consists of a parity group from discs using RAIDO/1/2/3/4/5/6 technology. RAID 6 is based on RAID 5 technology and includes dual parity protection of stored data. The created parity group is listed in LDEV Configuration table 29 shown in Fig 4 and has parity group number column 51 to identify the parity group within the storage subsystem 30, usable capacity size column 52 created from RAID resources, RAID configuration column 53, as well as the the discs column 54.

### LDEV Manager 23

LDEV manager 23 manages LDEV's structure and the behavior from LU's IOs. LDEV presents a logical storage area for LU to store and present data from/to host. LDEV is a portion of parity group and administrator defines and initially formats the region of the LDEV adding the number of LDEV. The mapping between LDEV and parity group is stored in LDEV Config 29 (Fig 4). On a parity group number 51, a record in LDEV Config has LDEV number 55 to identify the logical device within the storage subsystem, start Logical Block Address (LBA) 56 to represent LDEV's start address on the parity group, end LBA 57 to present LDEV's end address on the parity group and size 58 to present a size of LDEV. The initial format is requested by administrator. The default of format data is 0. The format data can be reconfigured by administrator like NULL or other character via console 402.

### Port 22

Port 22 provides LDEV via logical unit (LU) on a WWN to SAN 400. Fig 15 shows a mapping table between LU and LDEV LUN(Logical Unit Number) 83 and LDEV 84. Each value that is in the hardware port 81 column corresponds to one of the ports 22 in Fig 1. Each port 22 has its own WWN 82 to be specified from host. A plurality of LUs can be assigned on the port 22. An LU is specified by a set of WWN 82 and LUN 83. The maximum number of LU on a port is 256 based FC-SCSI specifications. Further, each LU is mapped to an LDEV to store data from hosts 10. Based on this mapping information, the CTL 20 receives SCSI commands from the port 22 and converts the set of WWN 82 and LUN 83 into the LDEV 84 to access the appropriate LDEV.

Some LUs can be configured as CMD DEV. When an LU is defined as CMD DEV by console 402, the row of CMD DEV 85 in Fig 15 will be checked. Storage Administrator creates LU and sets CMD DEV to LU using console 402. In each LU, administrator can configure LU as Virtual LU to represent LU for host even if LU doesn't have the LDEV or the image. When administrator sets LU as Virtual LU, the storage subsystem turns VLU bit 86 on. In this mode, storage subsystem always provides LU to host regardless of assignment of LDEV on LU.

### Virtual LU & Virtual LU Group (Not shown in pictures)

Virtual LU is initially unmapped to an LDEV associated with a port; in case of virtual LU on Storage subsystem, the LU for virtual LU has logical unit number which is one of parameters in the function call. Therefore, a host can access the LU using normal SCSI command. For example, in response to a SCSI inquiry from the host, the virtual LU responds with a normal response, taking into account the fact that the LDEV is unmapped. As the result of the SCSI inquiry, the size of LU is the maximum available storage capacity or any storage subsystem-specific size, for example 2GB. However the virtual LU does not have any associated LDEVs. Therefore, when SCSI Read/Write operation that comes from the initiator is executed on the virtual LU, the virtual LU responds with an error or other type of response like size 0 to initiator.

On CreateVLU function, JNL Manager marks an entry of the VLU 86 in Fig 5 corresponding to a LUN on a port. If an image which a LDEV and is applied journal (discuss in later) is mapped to Virtual LU, the inquiry returns the size which is the mapped LDEV's size. When SCSI Read/Write operation is executed, the volume can be read. As additional information, this virtual LU helps to fix the order of device name's number because some operating systems shuffle device names after attached new LU. Virtual LU Group helps to restore a set of images on consistency group to a set of Virtual LUs.

Fig 19 illustrates the table 330 of Virtual LU Group. The table 330 consists of Virtual LU Group (VLUG) Number 331, Nick Name 332, and Virtual LUN(Logical Unit Number) #1 333 and is located on controller's memory. The table is maintained by the API of the agent 15 and specifically the MapImageToVLU and UnMapImageFromVLU calls, which have been described in detail hereinabove. The console 402 may set the value of the Virtual LU Group.

### Journal Manager 24

Journal Manager manages After Journal (JNL) and Before Journal mechanism for target LDEV's including application marker operation. Before the Before and After Journal mechanisms will be discussed in detail, the volume configuration will first be explained.

### [Configuration]

The mapping between target LDEV and After JNL/Before JNL mechanism's volumes is depicted in Fig 5 as records in the CDP Configuration table 33. Each record in the table consists of the consistency group number (C.G. #) 61, a set of CDP protected target LDEV numbers 62, the command device's (CMD DEV) LDEV number 63 and the CDP protection mode which includes After JNL LDEV 64 and Before JNL LDEV 65. If the protection mode is enabled, the related volume information is also stored in the records 66 through 69. In case that After JNL mechanism is enabled, the base LDEV66 and JNL LDEV 67 are specified. Also, in case that Before JNL mechanism is enabled, the base LDEV 68 and JNL LDEV 69 are specified. The setting of consistency group may be done by Server Administrator or DBA via host agent 15 thought their API or console. The setting from 64 to 69 is done by Storage administrator via console 402.

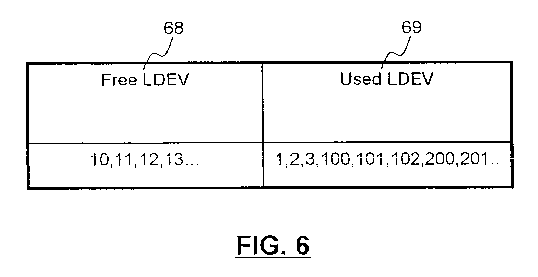

On allocation of LDEV, LDEV manager provides LDEV from LDEV pool (Fig 6). So storage administrator gets a LDEV from Free LDEV 68 in LDEV pool. If the LDEV is allocated to base LDEV or JNL LDEV, the LDEV is treated as "used' LDEV 69 in LDEV pool.

### [After JNL mechanism]

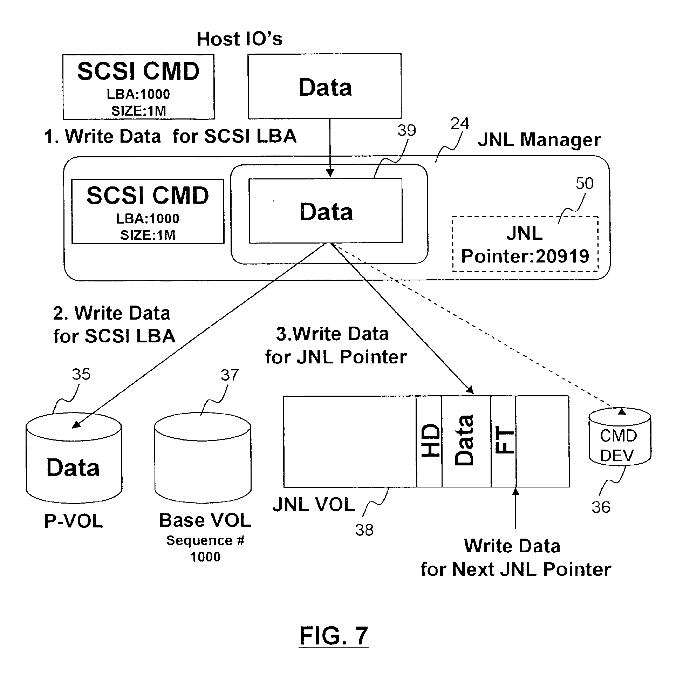

Fig 7 shows a diagram of the After JNL mechanism. After JNL mechanism makes a history of Write lO from hosts. In this configuration, there is Primary LDEV (Primary VOL) 35, Base LDEV (Base VOL) 37, JNL LDEV (JNL VOL) 38 and Command Device (CMD DEV) 36. Primary LDEV is target volume for CDP. The Base LDEV has a point in time of copy data at starting journaling on JNL LDEV 38 and a sequence number which is counted on each journal operations and leave the number after creation of PIT copy. JNL LDEV has lO journal and related CDP information like marker and the information of the lO operations. CMD DEV provides a communication method between host and storage subsystem using SCSI in-band communication. The operation is done by SCSI read/write command for a region of logical device on LDEV for CMD DEV.

JNL Manager has a JNL pointer 50 to find current write position on JNL LDEV. JNL Pointer start from 0 and it manages by logical block address (LBA). If the JNL volume has their management area like VTOC or MBR area, the start address is shifted by the size of their management area.

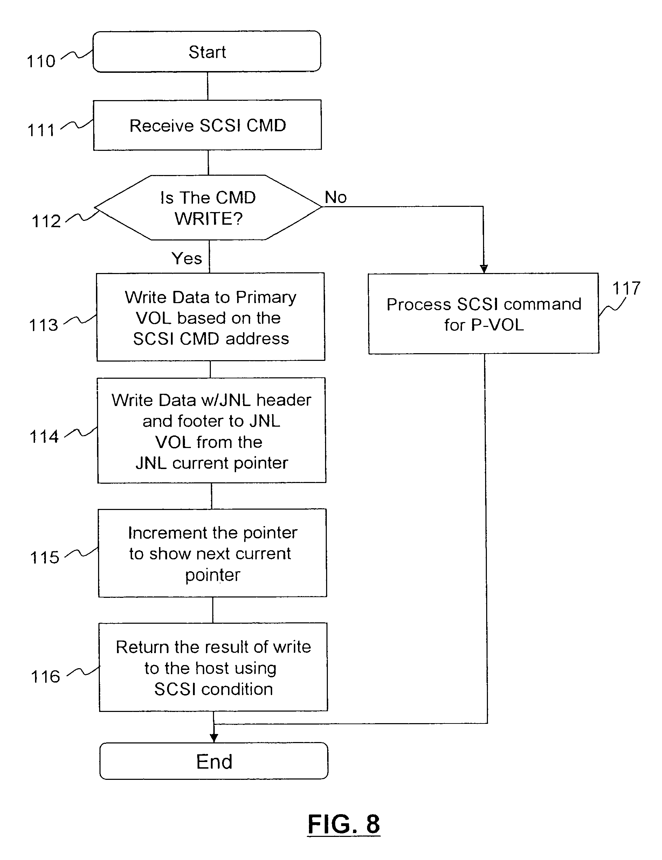

Fig 8 illustrates a procedure for handling the write command directed to the target LDEV, which is handled by the system illustrated in Fig 7. Follows is the detailed description of the specific steps of the aforesaid procedure.

### Begin of Procedure

Step 111: JNL Manager receives SCSI CMD which is sent from the host (Procedure 1 in Fig 7).

Step 112: JNL Manager checks if the command is SCSI WRITE commands like WRITE 6, WRITE 10, and etc. or not. If the command is WRITE command, the procedure goes to Step 113. If it is not, the procedure is goes to Step 117.

Step 113: JNL Manager writes data which is for target Primary LDEV to Primary LDEV based on initiator's SCSI command. (Procedure 2 in Fig 7)

Step 114: JNL Manager writes header (HD) information (detail in later), data, footer (FT) information for the journal starting from JNL Pointer's LBA on JNL LDEV 38. (Procedure 3 in Fig 7)

Step 115: JNL manager increases by total size of header, data, and footer to the pointer.

Step 116: JNL Manager returns the result of write to host using SCSI condition state.

Step 117: JNL manager executes other SCSI command like READ 6 operation on Primary LDEV.

### End of Procedure

The header/footer information includes header/footer bit, sequence # to identify lO within system, CMD Type for header/footer to show what type of header/footer like journal data, marker and etc, CMD if the CMD Type is journal data, CDP action if the CMD type is marker and etc., attribute for CDP action and comment for the attribute , Time when JNL Manager receives lO in JNL manager, SCSI command which is received from host, Start Address and size for journal data, header sequence number if the information is footer.

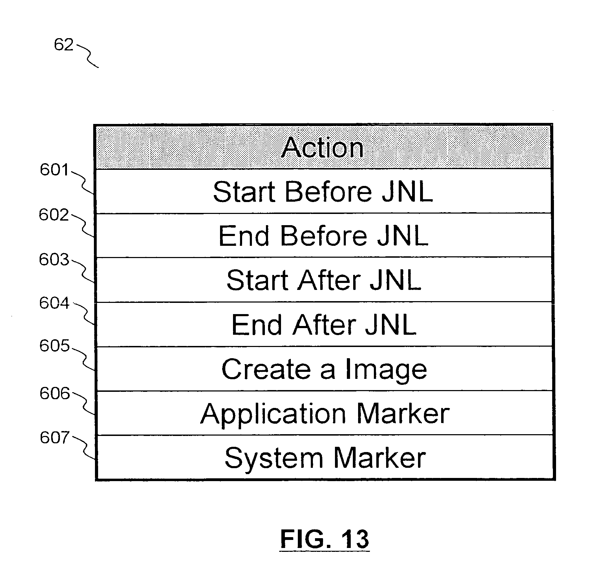

The sequence # is incremented by each header/footer insertion. If the sequence number is above their maximum number, the number may return to 0. CDP action, attribute, and comment keeps as the text or binary encoded data. CDP action keeps a name of CDP action based on list of Fig 13, attribute keeps a name of attribute on marker based a list of attribute 61, and the comment keeps an application and Journal Manager inputted comment.

The size of header/footer information is 2KB which is 4 by LBA in this invention. The size of header/footer may extent in order to be more capacity.

Regarding restore operation based on MapImageToVLU from host, the storage subsystem creates an image specified by time in MapImageToVLU or time and sequence number in "Create an image" attribute.

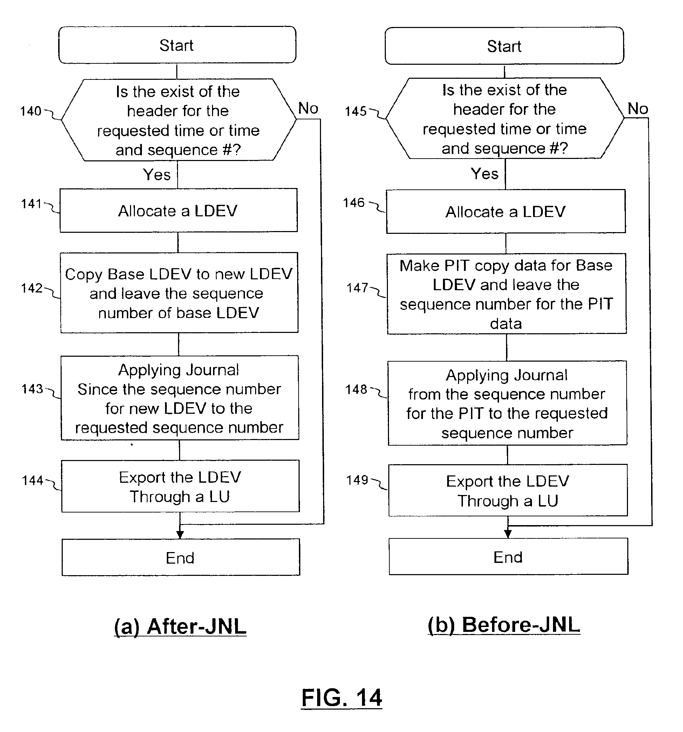

Before the operation, JNL Manager checks if the Virtual LU maps an image which journal applied LDEV using MapImageToVLU function working in Storage Subsystem or not because this operation uses Virtual LU. If another image has been mapped on Virtual LU and Read/Write access has been executed within last 1 minute, this operation is skipped as the Virtual LU is used. If not, the image is unmapped using UnMapImagefromVLU function working and returns to free. Following is the detailed description of the steps of the procedure illustrated in Fig. 14(a).

### Begin of Procedure

Step 140: JNL Manager looks for the header which is requested on time or sequence number and time. If there is header, the process continues to Step 141. If there is no header, the process goes to end of procedure.

Step 141: JNL Manager allocates a LDEV of which is same size from LDEV pool. To find same size of volume, JNL Manager looks up in size column 58 on LDEV Manager Table 29.

Step 142: JNL Manager creates a copy of base LDEV to new LDEV.

Step 143: JNL Manager applies journal data from the first journal data for base LDEV to the found header.

Step 144: JNL Manager exports LDEV through the virtual LU.

### End of Procedure.

### [Before JNL mechanism]

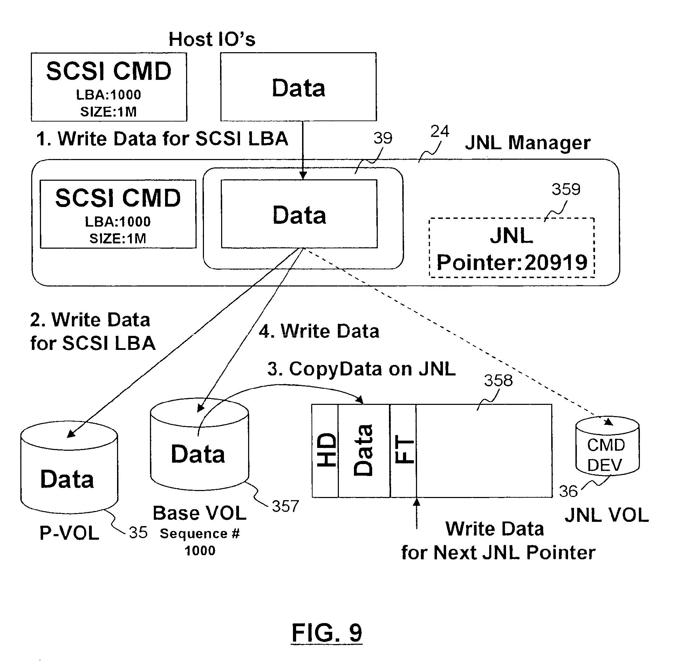

Fig 9 shows a diagram of Before JNL mechanism. Before JNL mechanism creates a history of JNL for base volume where the same data is stored in primary LDEV. This configuration includes primary LDEV (primary LDEV) 35, base LDEV (Base VOL) 357, JNL LDEV (JNL VOL) 358 and command device (CMD DEV) 36. The primary LDEV is a target volume for CDP. The base LDEV 357 stores the same data written to primary LDEV by the host's write operation and has a sequence number which is counted on each journal operations.

JNL volume has copy-on-write journal for the base LDEV and related CDP information such as the marker and the input-output (lO) information. CMD DEV is also provided as same as the After JNL mechanism.

JNL Manager also has a JNL pointer 359 identifying the current write position within the JNL LDEV.

In this disclosure, it is assumed that the primary LDEV and base LDEV are duplicated for backup purposes. However, it is also possible to use only the target LDEV without the base volume. Therefore one may eliminate the Base LDEV. In this case, the JNL manager maintains the copy on write journal on the target Primary LDEV instead of the base LDEV 357 and stores the journal data on the JNL DEV 358. Therefore, the procedure in Fig 9 executes Steps 1, 3 and 4, but not step 2.

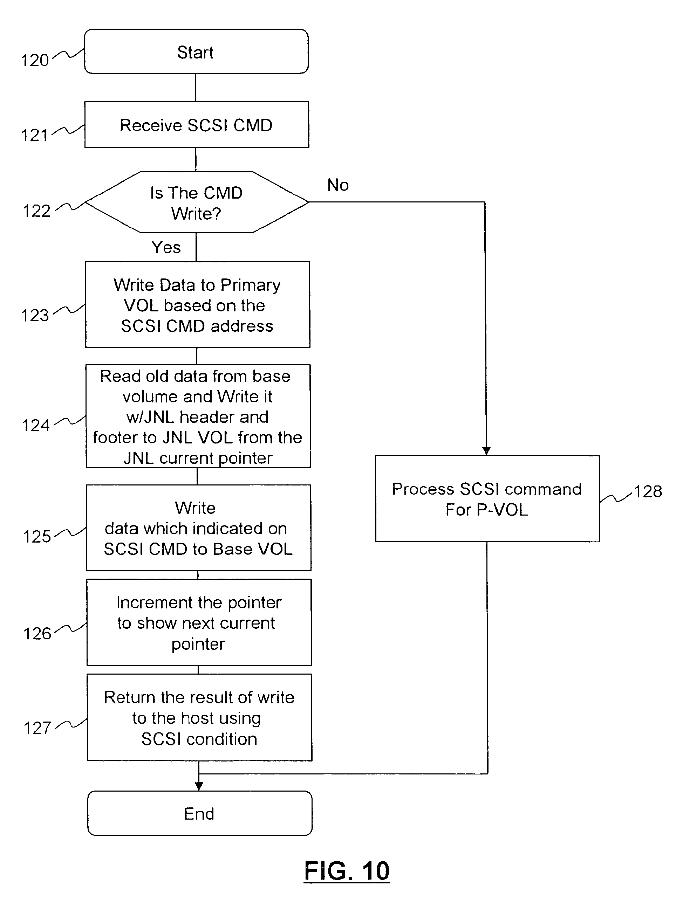

Fig 10 shows procedures of the write command for target LDEV corresponding to the configuration shown in Fig 9. The specific steps of the illustrated procedure are described below.

### Begin of Procedure

Step 121: JNL Manager receives SCSI CMD which is sent from the host

### (Procedure 1 in Fig 9)

Step 122: JNL Manager checks if the command is SCSI WRITE commands like WRITE 6, WRITE 10, or not. If the command is WRITE command, the procedure goes to Step 123. If it is not, the procedure is goes to Step 128.

Step 123: JNL Manager writes data, which the SCSI command was sent, to target Primary LDEV based on SCSI command. (Procedure 2 in Fig 9)

Step 124: JNL Manager reads old data which is indicated by LBA and size in WRITE operation from Base LDEV 357 and writes header(HD) information (detail in later), the old data, footer(FT) information for the journal starting from JNL Pointer's LBA to the JNL LDEV 358. (Procedure 3 in Fig 9)

Step 125: JNL Manager writes data, which the SCSI command was sent, to Base LDEV 5 based on sent SCSI command. (Procedure 4 in Fig 9)

Step 126: JNL manager adds size of header, data, and footer to the pointer.

Step 127: JNL Manager returns the result of write to host using SCSI condition state.

Step 128 : JNL manager executes other SCSI command like READ 6 operation on Primary LDEV.

### End of Procedure

In case of eliminating Base LDEV, the procedure skips the Step 123 and writes data on primary volume instead of the Base LDEV in Step 125

Regarding the restore operation based on the MapImageToVLU from the host, the storage subsystem creates an image specified by time in MapImagToVLU or time and sequence number in "Create an image" attribute. Following is the description of the specific steps of the procedure illustrated in Fig. 14(b).

### Begin of Procedure

Step 145: JNL Manager looks for the header which based on time or sequence number and time on JNL VOL. If there is header, the process continues to Step 146. If there is no header, the process goes to end of procedure.

Step 146: JNL Manager allocates a LDEV of which is same size from LDEV pool. To find same size of volume, JNL Manager looks a volume which is as same size as Primary LDEV up in size column 58 on LDEV Manager Table 29 based on free LDEV pool 68 on Fig 6.

Step 147: JNL Manager creates a point in time of data for Base LDEV to new LDEV and leaves the current sequence number of journal on LDEV's sequence number.

Step 148: JNL Manager applies journal data from the requested sequence number to the sequence number on new LDEV.

Step 149 : JNL Manager exports LDEV through Virtual LU.

### End of Procedure.

### [Marker]

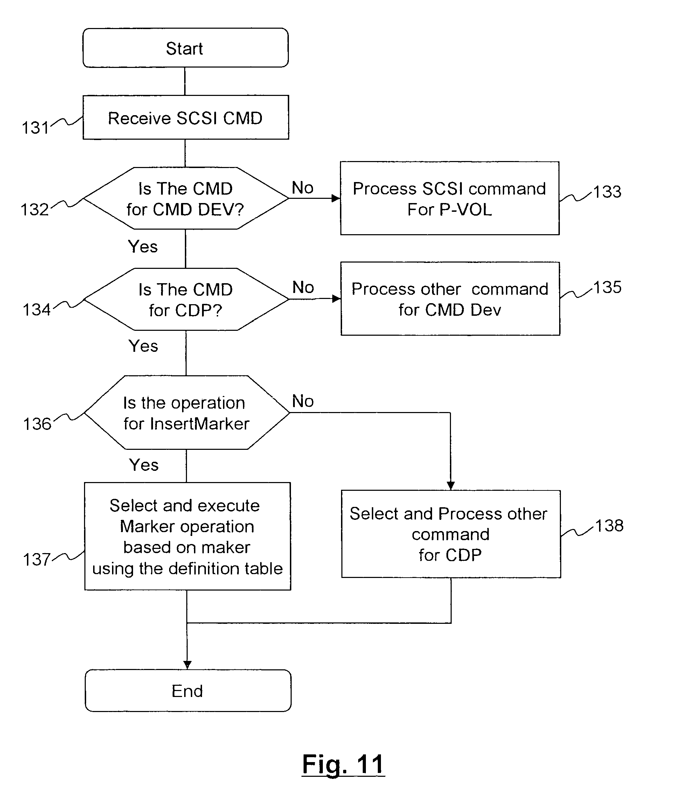

Before After/Before JNL mechanism, the JNL Manager 24 monitors SCSI operation for CMD DEV which is within consistency group. The consistency group makes lO serialize among LUs including CMD DEV within the group which is defined in CDP Config 33. Fig 11 shows work of JNL manager.

### Begin of Procedure

Step 131: JNL Manager receives SCSI CMD from port 22.

Step 132: JNL Manager checks if the SCSI CMD is for CMD DEV based on LUN which is found FCP_LUN in Fibre Channel Frame. The definition of relation between LU and CMD DEV is listed on CMD DEV 85 in table 25. If the target LUN of SCSI CMD is for CMD DEV, the procedure goes to Step 134. If the target LUN of SCSI CMD is not for it, the procedure goes to Step 133.

Step 133: JNL Manager processes SCSI command for Primary LDEV. The procedure will continue to Step 110 in Fig 8 and Step 120 in Fig 10 checking each protection mode 64, 65 in Fig 5.

Step 134: JNL Manager checks if the SCSI CMD is for CDP based on above described API operations or not. If the CMD is for CDP, the procedure goes to Step 136. If the CMD is not for it, the procedure goes to Step 135.

Step 135: JNL Manager processes other command for CMD DEV including local mirror like Shadowlmage® and remote mirror operation like TrueCopy®.

Step 136: JNL Manager checks if the CMD is for InsertMarker operation from Host. If the operation is InsertMarker, the procedure goes to Step 137. If the operation is not for InsertMarker, the procedure goes to Step 138.

Step 137: JNL Manager selects CDP action from application attribute and action table on marker based on marker's attribute. We will discuss about relations for application attribute and action in later. And JNL Manager executes the selected action.

Step 138: JNL Manager selects operations on CDP and executes the operations.

### End of Procedure

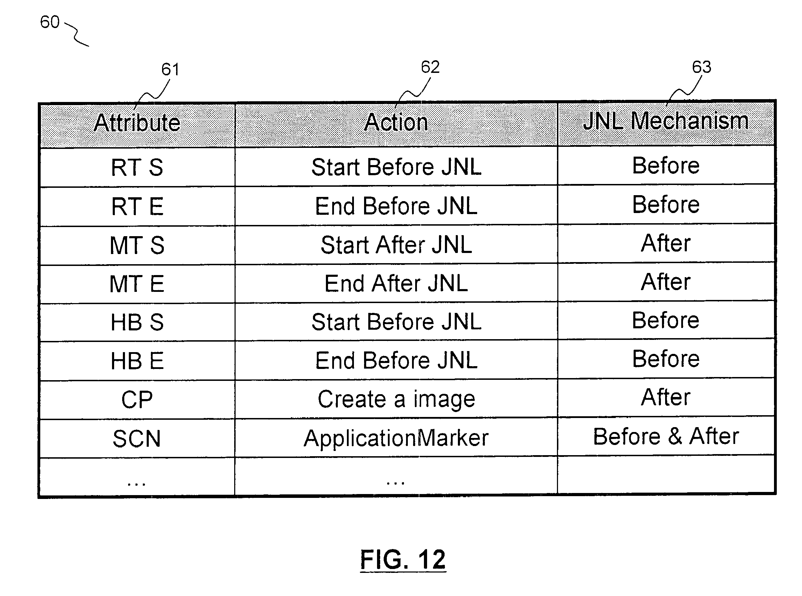

Regarding Step 137, JNL Manager selects a CDP action from application attribute and action table. The table is showed in Fig 12. The table is defined by console 402 or application agent. The table may be loaded from console application agent as a file or other kind of distribution method. The table consists of attribute which is indicated Attribute parameter in Insertmarker function and CDP action which is to execute CDP operations in storage subsystem. Example of CDP action, Fig 13 shows a list of actions. Following are detail of actions.

(a) "Start Before JNL" action (601)

In case of "Start Before JNL" action, JNL manager makes a point in time copy (PIT) data of Primary LDEV to Base LDEV. After PIT, JNL manager suspends lO from host, turns on the protection mode 65 in Fig 5 and writes header and footer information as the marker including "Start Before JNL" as CDP action, attribute, comment from application. JNL manager also writes with incremented sequence number, CMD type, CDP action, attribute and comment if there is in the header and footer information to JNL LDEV. And then, JNL manager starts copy on write journal from Base LDEV to JNL LDEV and restart the lO processing. If Primary LDEV and Base LDEV is same volume, the PIT operation doesn't need.

(b) "End Before JNL" (602)

In case of "End Before JNL" action, JNL manager suspended lO journaling and duplicated writes between Primary LDEV and Base LDEV. JNL manager turns off the protection mode 65 in Fig 5 and writes header and footer information as the marker including "End Before JNL", attribute and comment from application on the JNL LDEV. JNL manager also writes with incremented sequence number, CMD type, CDP action, attribute, and command if there is in header and footer information to JNL LDEV. If Primary LDEV and Base LDEV is same volume, the suspended of duplicated lO operation between Primary DEV and Base DEV doesn't need.

(c) Start After JNL (603)

In case of "Start After JNL" action, JNL manager makes a PIT volume between Primary LDEV and Base LDEV. After PIT operation, JNL manager turns on the protection mode 64 in Fig 5 and writes header and footer information as the marker including "Start After JNL", and then starts lO write journal, attribute and comment from application to JNL LDEV. JNL manager also writes with incremented sequence number, CMD type, CDP action, attribute and comment if there is in header and footer information.

(d) End After JNL (604)

In case of "End After JNL" action, JNL manager suspends lO journaling. JNL manager turns off the protection mode 64 in Fig 5 and writes header and footer information as the marker which is "End After JNL" on the JNL LDEV. JNL manager also writes with incremented sequence number, CMD type, CDP action, attribute and comment if there is in header and footer information to JNL LDEV.

(e) Create an image (605)

The operation creates an image of volume after inserting marker at the same time. Regarding the working, JNL Manager writes a header and footer information which indicates application provided attribute which is "Create an image" to JNL LDEV at first. JNL Manager creates an image based on each JNL mechanism which have already been discussed above.

(f) Application marker (606)

Application uses the application marker that is left application's attribute including transaction ID on comment on JNL LDEV. JNL Manager writes a header and footer information which indicates application provided attribute which is "Application maker" to JNL LDEV

JNL manager also writes with incremented sequence number, CMD type, CDP action, attribute and comment if there is in header and footer information to JNL LDEV

(f) System marker (607)

JNL Manager will use System marker to leave JNL manager's event like PIT event in comment on JNL LDEV.

JNL manager also writes with incremented sequence number, CMD type, CDP action, attribute and comment if there is in header and footer information to JNL LDEV.

### Working with After and Before JNL mechanism at the same time

After and Before JNL can be work at the same time independently. However the marker may be filter to each mechanism. In this patent, the Action's 63 in Fig 12 helps to distinguish JNL mechanism. If an entry in JNL mechanism 63 corresponding to each attribute is Before, JNL manager writes header/footer information to Before JNL LDEV based on a marker from host. Also if After is, then JNL manager write header/footer information to After JNL LDEV based on a marker from host, If After & Before is, then JNL Manager write header/footer information to both After JNL and Before JNL LDEVs based on a marker from host.

Upon the creation of the image, the storage subsystem 30 may select the source JNL mechanism. For example, if the DB requests JNL Manager to create an image by the time or the time and the sequence, the JNL manager chooses After JNL mechanism's image creation. If DB requests Storage Subsystem to create an image between HB S to HB E attribute, then Storage Subsystem chooses Before JNL mechanism's image creation. The controller has this setting.

### Console 402

The Console 402 provides a capability for administrator to manage storage subsystem via LAN/WAN 401. The console provides GUIs for the creation of LDEV, the mapping of LDEV to Logical Unit (LU), a creation of LDEV pool, the mapping of LDEV to LU and etc.

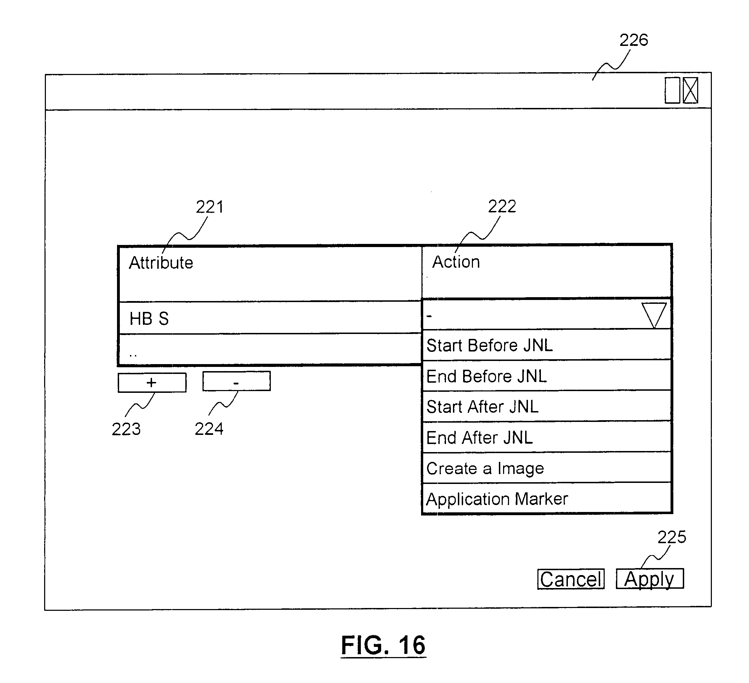

Specially, to make a link between application attribute and action, the console provides a GUI. Fig 16 shows an example of GUI. There are two columns. One is Application Attribute 221. The Application Attribute is defined and used in API. Another is CDP action. Each attribute has a CDP action. Storage Administrator or DBA selects an action from a list of actions. If Administrator or DBA want to add another or delete row, the button 223 can increase a row to last row or the button 224 can decrease a row from last row.

After the setting, the Administrator or DBA pushes the apply button 225. The table information is loaded on application attribute-action table 60 in the storage subsystem 30 using the LoadApplicationAttributesTable function, and then activates the table on controller using the ActivateTable function.

### Configuration for using the inventive system with an application

Before the application attribute and action table can be used, the system setup must be completed. In this configuration, it is assumed that both Before and After JNL mechanisms are used for a target primary LDEV. The configuration is the following.

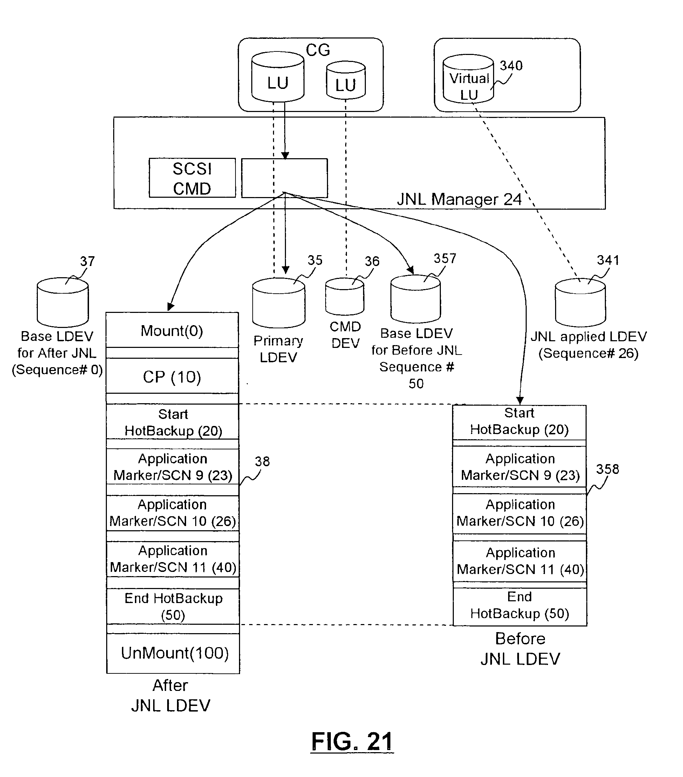

Fig 21 shows configuration for the storage. Storage administrator allocates the target primary LDEV 35, CMD DEV 36, two base LDEVs 37 for After JNL, 357 for Before JNL, After JNL LDEV 38, and Before JNL LDEV 358, and maps the target Primary LDEV and the CMD Device to LU on host attached port 22 and make a relation among target Primary LDEV, Base LDEVs and JNL LDEVs configuring CDP config 33 via console 402 in Fig 5. Server Administrator creates a consistency group.

Storage Administrator also creates virtual LUs and virtual LU group for the consistency group via console 50 or agent 16 and prepares free LDEVs which have the same size as the primary LDEV on LDEV pool 68 to restore data.

Server system administrator installs OS on the host 10 and discovers the LUs including target LDEV and CMD DEV. Subsequently, DBA or Server Administrator installs the agent 15 on host and establishes a connection with the CMD device.

After that, DBA installs an application within the host 15, such as a database (DB) application, which can issue calls to the API of the agent 15 based on the application's events.

The application attribute-action table 60 may be defined using two methods. In accordance with one such method, administrator defines this table based on database(DB)-provided configuration file 17. DBA or storage administrator creates the application attribute-action table 60 using the GUI of the console 402 or the command line interface of the agent 15 of the host 10 based on the configuration file 17 provided by the database. If the host 10 is used, the table information is loaded to the controller 20 using the LoadApplicationAttributeTable function based command, and then the table is activated using the ActivateTable function based command. Another method involves loading the configuration table using the LoadApplicationAttirbuteTable function and then activating it using the ActivateTable function.

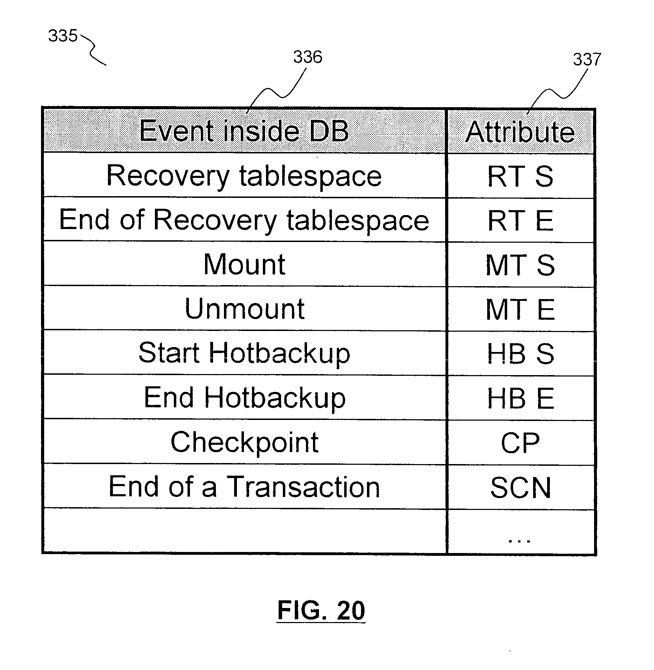

Regarding the attributes, in this description, it is assumed that the attributes are internal commands of the DB. If there are other internal commands, one can create the apporpriate command-to-attribute mappling. The corresponding mapping table is shown in Fig. 20.

### System Behavior

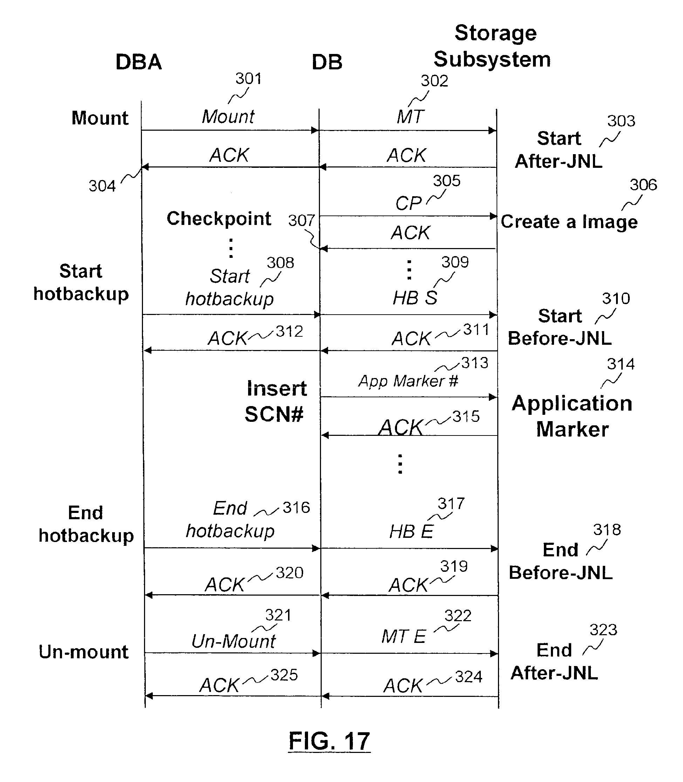

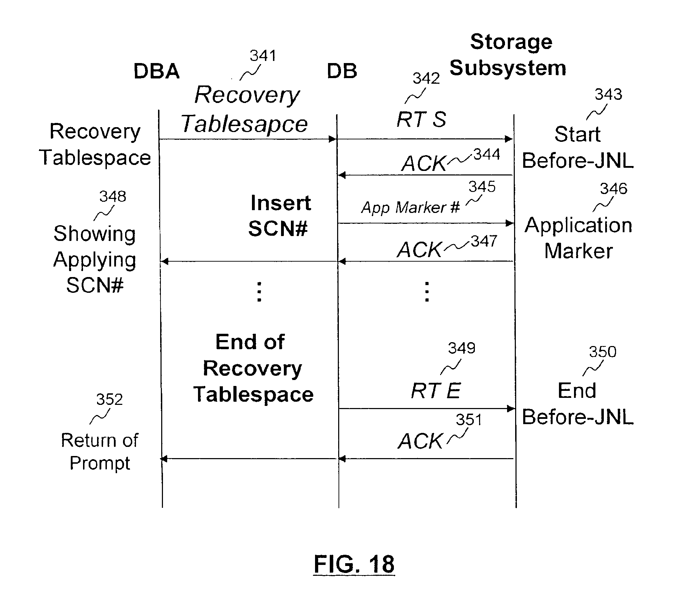

Fig 17 and Fig 18 illustrate use cases when an application uses attribute function for CDP.

Specifically, Fig 17 shows an example of Backup behavior which is that Application runs following operations during normal operation.

### Begin of Behavior

Step 301: DBA issues mount tablespace operation which is stored on target Primary LDEV to DB.

Step 302: DB issues mount's attribute (MT) via maker.

Step 303: Storage Subsystem executes Start After-JNL action (603) based on application attribute and action table.

Step 304: After Storage Subsystem's ACK, DB mounts tablespace. DB's client application executes SQL command sets after the mount operation.

Step 305: DB executes checkpoints, which DB indicates consistency state for database tables and suspends their operation, DB issues CP's attribute via maker based on the table 335.

Step 306: Storage subsystem executes Create an image operation based on the table.

Step 307: After Storage Subsystem's ACK, DB continues to execute SQL command sets.

Step 308: DBA starts hot backup mode to DB.

Step 309: DB issues HB S attribute via maker after the starting hot backup mode.

Step 310: Storage Subsystem executes Start Before-JNL action (601) based on the table 60.

Step 311 After Storage Subsystem's ACK, DB becomes hot backup mode.

Step 312: DB returns the prompt to DBA.

Step 313: DB requests to insert application maker with transaction number like System Commit Number after each commit of transaction via agent InsertMarker API. The transaction number is stored on comment field in marker.

Step 314: Storage subsystem executes application marker operation.

Step 315: After Storage subsystem's ACK, DB continues to process their transaction.

Step 316: DBA requests end of hot backup mode.

Step 317: DB issues HB E attribute via maker after the hot backup mode based on the table 335.

Step 318: Storage Subsystem executes End of Before JNL action (602) based on the table 60.

Step 319: After Storage Subsystem's ACK, DB finishes hot backup mode continue to execute SQL command sets.

Step 320: DBA receives their prompt.

Step 321: DBA un-mounts table space.

Step 322: DB unmounts the tablespace and issues MT E attribute via maker based on the table 335.

Step 323: Storage Subsystem executes End of After JNL action (604) based on the table 60.

Step 324: After Storage Subsystem's ACK, DB returns result to DBA.

Step 325 DBA receives their prompt.

### End of Behavior

Regarding restore operation, the DBA requests an image which is taken on hot backup mode to storage subsystem via agent's API. The requests from DBA via DB are to search for HB S attribute using SearchMarker API , to receive of a list of HB S marker, to request a image specifying by sequence and time which is select from the list of HB S marker using MapImageToVLU or MapCTGtoVLUG API. DBA can use backup data from VLUs. To recovery data on DB, DBA applies the DB's log to the DB's tablespace using DB's roll forward process because CDP take the DB log and tablespace by atomic break.

If DBA needs to rollback and rollforward to a transaction number, the DB's log and table space doesn't have rollback information. In this situation, the present invention helps to recover the rollback. If the image is not modified, Storage applies journal data from a header which has user requested attribute's sequence until image's sequence number. To select before or after journal, the JNL manager selects a before JNL if the requested number is below image's sequence number. Also the JNL manager selects after JNL if the requested sequence number is above it.

For example (Fig 21), there is an image 341 which is mapped to VLU has 26 as sequence number. If DBA wants to restore 40 as sequence number in SCN 11, JNL Manager selects the After JNL. On the other hand , if DBA wants to restore 23 as sequence number in SCN 9, JNL Manager selects the Before JNL.

The benefits considering application behavior are the following.

Regarding mounting/un-mounting operation which use Step 301 and 315, the length of journal can be eliminated during un-active of DB.

Regarding checkpoint operation which is Step 306, administrator can use pre-created volume image.

Regarding start/end backup operation which is Step 309 and 312, DB can create rollback image using After JNL mechanism.

Regarding recovery, DBA can rollback data on restore even if the DB enters backup mode.

Fig 18 illustrates another example, which involves an application executing the followings operations during the recovery procedure. In this example, the DBA takes charge when a database table or related information is lost.

### Begin of Behavior

Step 341: The DBA indicates to database to recover table space like RECOVER TABLESPACE.

Step 342: After the operation, the DB inserts a marker which includes RT S attribute based on the table 335 via the agent InsertMarker API.

Step 343: Storage Subsystem executes Start Before JNL action (601) based on request RT S attribute based the table 60.

Step 344: After Storage subsystem's ACK, DB starts to process recovery operation for a transaction from their logs.

Step 345: DB inserts a maker with transaction number like System Change Number(SCN) after each commit of transaction which is written on journal via agent InsertMarker API. The transaction number is stored on comment field in marker.

Step 346: Storage subsystem executes application marker operation.

Step 347: After Storage subsystem's ACK, the DB continues to process recovery operation for a transaction from their logs.

Step 348: The DBA receives current executed transaction number on recovery from the DB.

Step 349: After the DB applied all of the logs, DB issues marker RT E which signals the end of the recovery tablespace.

Step 350: Storage subsystem executes End Before-JNL action (602) based the table 60.

Step 351: After Storage Subsystem's ACK, the DB returns result to the DBA.

Step 352: DB returns the prompt for the DBA.

### End of Behavior

When DBA finishes restoring data after roll forward operation, if the DBA requests DB to search a marker by SCN number in the comment field of the JNL by the SearchMarker function call, the storage subsystem provides a list of markers which are written as a portion of the header. From the list of markers, DBA selects sequence # and time to retrieve the image corresponding to the SCN appearing in the comment. Then the DBA requests the DB to get volumes specified by sequence # using MapCTGtoVLUG function call. Storage Subsystem provides a set of images on Virtual LUs which is specified on Virtual LU Group. The DB may mount table space after the mapping of Virtual LU.

Finally, it should be understood that processes and techniques described herein are not inherently related to any particular apparatus and may be implemented by any suitable combination of components. Further, various types of general purpose devices may be used in accordance with the teachings described herein. It may also prove advantageous to construct specialized apparatus to perform the method steps described herein. The present invention has been described in relation to particular examples, which are intended in all respects to be illustrative rather than restrictive. Those skilled in the art will appreciate that many different combinations of hardware, software, and firmware will be suitable for practicing the present invention. For example, the described software may be implemented in a wide variety of programming or scripting languages, such as Assembler, C/C++, perl, shell, PHP, Java, etc.

Moreover, other implementations of the invention will be apparent to those skilled in the art from consideration of the specification and practice of the invention disclosed herein. Various aspects and/or components of the described embodiments may be used singly or in any combination in the computerized storage system with data replication functionality. It is intended that the specification and examples be considered as exemplary only, with a true scope and spirit of the invention being indicated by the following claims.

## Claims

1. A computerized system for continuous data protection, the system comprising:
a. A host executing a user application;
b. A storage subsystem coupled to the host via a network interconnect, the storage subsystem comprising at least one storage controller and at least one storage disc operatively coupled to the storage controller, wherein the at least one storage disc is apportioned into at least one logical partition and wherein the storage subsystem further comprises:
i. A primary volume operable to store current data associated with the user application;
ii. A base volume operable to store first data associated with the user application;
iii. A journal volume operable to store second data associated with the user application;
iv. A journal manager operable to intercept a data write request sent by the host to the storage subsystem and to write data associated with the intercepted request to the primary volume and the base volume and to write the second data associated with the user application into the journal volume; and
v. A command device operable to receive from the host a command attribute selected from a plurality command attributes, and to configure the journal manager based on the received command attribute.

2. The computerized system of claim 1, wherein, in response to a start after journal command attribute received by the command device, the journal manager is operable to store the second data in the journal volume, the second data comprising the incremental change data associated with the data write request.

3. The computerized system of claim 1 or claim 2, wherein, in response to a start before journal command attribute received by the command device, the journal manager is operable to copy a previous point-in-time copy of the data from the base volume to the journal volume.

4. The computerized system of any one of claims 1 to 3, wherein the storage subsystem further comprises a journal pointer store operable to store a pointer value identifying a next available location within the journal volume, and wherein the journal manager is additionally operable to increment the pointer value upon completion of each writing of the data into the journal volume.

5. The computerized system of any one of claims 1 to 4, wherein the journal manager is operable to write a record into the journal volume, the record comprising:
a. a header;
b. the second data associated with the user application; and
c. a footer.

6. The computerized system of claim 5, wherein the header comprises marker information associated with the user application and wherein the storage subsystem is operable to receive the marker information from the host.

7. The computerized system of claim 5 or claim 6, wherein the footer comprises marker information associated with the user application.

8. The computerized system of claim 2, or any claim dependent on claim 2, wherein in response to an image copy command attribute received from the host by the storage system, the journal manages is operable to create a point-in-time copy of the data associated with the user application in the base volume and wherein the created point-in-time copy of the data corresponds to the beginning of records in the journal volume.

9. The computerized system of claim 2, or any claim dependent on claim 2 wherein the journal manager is operable to write the data associated with the intercepted request to the journal volume after writing the data associated with the intercepted request to the primary volume.

10. The computerized system of any one of claims 1 to 9, wherein the journal manager is additionally operable to return a result of the data write request to the host.

11. The computerized system of any one of claims 1 to 10, wherein the received command attribute comprises instruction on the journaling mode of operation of the journal manager.

12. The computerized system of claim 11, wherein the command device, the primary volume, the base volume and the journal volume are associated into a consistency group.

13. The computerized system of claim 12, wherein the storage subsystem further comprises a configuration table operable to store information on the consistency group.

14. The computerized system of claim 12 or claim 13, wherein the configuration table further comprises information on whether the data associated with the user application should be protected using an After Journal mode or a Before Journal mode.

15. The computerized system of claim 3, or any claim dependent on claim 3 wherein the journal manager is operable to copy the previous point-in-time copy of the data from the base volume to the journal volume after writing the data associated with the intercepted request to the primary volume and to write the data associated with the intercepted request to the base volume after the copying.

16. The computerized system of claim 15, wherein the previous point-in-time copy of the data from the base volume is written to the journal volume with at least one of a journal header and a journal footer.

17. The computerized system of claim 3, or any claim dependent on claim 3, wherein the base volume stores a mirror copy of data in the primary volume.

18. The computerized system of any one of claims 1 to 17, wherein the storage subsystem is operable to apply at least one record stored in the journal volume to data store in at least one logical partition to produce an image and map the resulting image to a virtual logical unit accessible by the host.

19. The computerized system of claim 18, wherein applied records of the journal volume are specified by at least one of time and sequence number.

20. The computerized system of claim 18 or claim 19, wherein prior to the mapping, the virtual logical unit is not associated with any logical storage device.

21. The computerized system of any one of claims 1 to 20, further comprising at least one virtual logical unit, wherein the storage subsystem is operable to:
i. receive a request for a size of the virtual logical unit;
ii. if there is a logical device associated with the virtual logical unit, to return the size of the logical device; and
iii. if there is no logical device associated with the virtual logical unit, to return 0 or error.

22. A computer-implemented method comprising:
a. Receiving at a storage subsystem a command attribute specifying an after journaling mode;
b. Intercepting at a storage subsystem a storage access command issued by a user application;
c. Determining whether the intercepted storage access command comprises a write operation;
d. If the intercepted storage access command does not comprise the write operation, processing the intercepted storage access command at primary storage volume and terminating the operation;
e. If the intercepted storage access command comprises the write operation, writing data associated with the storage access command to the primary volume; and
f. Writing incremental change data associated with the storage access command to a journal volume.

23. A computer-implemented method of claim 22, further comprising incrementing a journal pointer to identify a next available location in the journal volume.

24. A computer-implemented method of claim 22 or claim 23, further comprising returning a result of the storage access command to the user application.

25. A computer-implemented method of any one of claims 22 to 24, wherein writing of data to the journal volume further comprises writing a header and footer to the journal volume.

26. A computer-implemented method of claim 25, further comprising receiving marker information from the user application and incorporating the marker information into the header.

27. A computer-implemented method of claim 25 or claim 26, further comprising receiving marker information from the user application and incorporating the marker information into the footer.

28. The computer-implemented method of any one of claims 22 to 27, further comprising applying at least one record stored in the journal volume to data store in a logical storage device to produce an image and mapping the resulting image to a virtual logical unit accessible by a host.

29. The computer-implemented method of claim 28, wherein applied records of the journal volume are specified by at least one of time and sequence number.

30. The computer-implemented method of claim 28 or claim 29, wherein prior to the mapping, the virtual logical unit is not associated with any logical storage device.

31. The computer-implemented method of any one of claims 28 to 30, further comprising:
i. receiving a request for a size of the virtual logical unit;
ii. if there is a logical device associated with the virtual logical unit, returning the size of the logical device; and
iii. if there is no logical device associated with the virtual logical unit, returning 0 or error.

32. A computer-implemented method comprising:
a. Receiving at a storage subsystem a command attribute specifying a before journaling mode;
b. Intercepting at a storage subsystem a storage access command issued by a user application;
c. Determining whether the intercepted storage access command comprises a write operation;
d. If the intercepted storage access command does not comprise the write operation, processing the intercepted storage access command at primary storage volume and terminating the operation;
e. If the intercepted storage access command comprises the write operation, writing data associated with the storage access command to the primary volume;
f. Copying old data from a base volume to a journal volume; and
g. Writing data associated with the storage access command to the base volume.

33. A computer-implemented method of claim 32, further comprising incrementing a journal pointer to identify a next available location in the journal volume.

34. A computer-implemented method of claim 32 or claim 33, further comprising returning a resuit of the storage access command to the user application.

35. A computer-implemented method of any one of claims 32 to 34, wherein writing of data to the journal volume further comprises writing a header and footer to the journal volume.

36. A computer-implemented method of claim 35, further comprising receiving marker information from the user application and incorporating the marker information into the header.

37. A computer-implemented method of claim 35 or claim 36, further comprising receiving marker information from the user application and incorporating the marker information into the footer.

38. The computer-implemented method of any one of claims 32 to 37, further comprising applying at least one record stored in the journal volume to data store in a logical storage device to produce an image and mapping the resulting image to a virtual logical unit accessible by a host.

39. The computer-implemented method of claim 38, wherein applied records of the journal volume are specified by at least one of time and sequence number.

40. The computer-implemented method of claim 38 or claim 39, wherein prior to the mapping, the virtual logical unit is not associated with any logical storage device.

41. The computer-implemented method of any one of claims 38 to 40, further comprising:
i. receiving a request for a size of the virtual logical unit;
ii. if there is a logical device associated with the virtual logical unit, returning the size of the logical device; and
iii. if there is no logical device associated with the virtual logical unit, returning 0 or error.

42. A computer-readable medium, embodying computer-readable instructions, which, when executed by one or more processors, cause the one or more processors to:
a. Receive at a storage subsystem a command attribute specifying an after journaling mode;
b. Intercept at a storage subsystem a storage access command issued by a user application;
c. Determine whether the intercepted storage access command comprises a write operation;
d. If the intercepted storage access command does not comprise the write operation, process the intercepted storage access command at primary storage volume and terminate the operation;
e. If the intercepted storage access command comprises the write operation, write data associated with the storage access command to the primary volume; and
f. Write incremental change data associated with the storage access command to a journal volume.

43. The computer-readable medium of claim 42, wherein the computer-readable instructions further cause the one or more processors to apply at least one record stored in the journal volume to data store in a logical storage device to produce an image and map the resulting image to a virtual logical unit accessible by a host.

44. The computer-readable medium of claim 43, wherein applied records of the journal volume are specified by at least one of time and sequence number.

45. The computer-readable medium of claim 43 or claim 44, wherein prior to the mapping, the virtual logical unit is not associated with any logical storage device.

46. The computer-readable medium of any one of claims 43 to 45, wherein the computer-readable instructions further cause the one or more processors to:
i. receive a request for a size of the virtual logical unit;
ii. if there is a logical device associated with the virtual logical unit, return the size of the logical device; and
iii. if there is no logical device associated with the virtual logical unit, return 0 or error.

47. A computer-readable medium, embodying computer-readable instructions, which, when executed by one or more processors, cause the one or more processors to:
a. Receive at a storage subsystem a command attribute specifying a before journaling mode;
b. Intercept at a storage subsystem a storage access command issued by a user application;
c. Determine whether the intercepted storage access command comprises a write operation;
d. If the intercepted storage access command does not comprise the write operation, process the intercepted storage access command at primary storage volume and terminate the operation;
e. if the intercepted storage access command comprises the write operation, write data associated with the storage access command to the primary volume;
f. Copy old data from a base volume to a journal volume; and
g. Write data associated with the storage access command to the base volume.

48. The computer-readable medium of claim 47, wherein the computer-readable instructions further cause the one or more processors to apply at least one record stored in the journal volume to data store in a logical storage device to produce an image and map the resulting image to a virtual logical unit accessible by a host.

49. The computer-readable medium of claim 48, wherein applied records of the journal volume are specified by at least one of time and sequence number.

50. The computer-readable medium of claim 48 or claim 49, wherein prior to the mapping, the virtual logical unit is not associated with any logical storage device.

51. The computer-readable medium of any one of claims 48 to 50, wherein the computer-readable instructions further cause the one or more processors to:
i. receive a request for a size of the virtual logical unit;
ii. if there is a logical device associated with the virtual logical unit, return the size of the logical device; and
iii. if there is no logical device associated with the virtual logical unit, return 0 or error.
